(19) Europäisches Patentamt
European Patent Office
Office européen des brevets

(11) EP 3 274 578 B1

(12) **FASCICULE DE BREVET EUROPEEN**

(45) Date de publication et mention
de la délivrance du brevet:
**01.05.2019 Bulletin 2019/18**

(21) Numéro de dépôt: **16719444.8**

(22) Date de dépôt: **25.03.2016**

(51) Int Cl.:
*F02K 1/34* $^{(2006.01)}$    *F02K 1/38* $^{(2006.01)}$

(86) Numéro de dépôt international:
**PCT/FR2016/050690**

(87) Numéro de publication internationale:
**WO 2016/151267 (29.09.2016 Gazette 2016/39)**

(54) **DISPOSITIF A GRILLES D'EJECTION DE MICROJETS POUR LA REDUCTION DU BRUIT DE JET D'UNE TURBOMACHINE**

VORRICHTUNG MIT GITTERN ZUM AUSSTOSSEN VON MIKROSTRAHLEN ZUR MINDERUNG DES STRAHLLÄRMS EINES TURBINENMOTORS

DEVICE WITH GRATINGS FOR EJECTING MICROJETS IN ORDER TO REDUCE THE JET NOISE OF A TURBINE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2015 FR 1552535**
**26.03.2015 FR 1552536**

(43) Date de publication de la demande:
**31.01.2018 Bulletin 2018/05**

(73) Titulaire: **SAFRAN AIRCRAFT ENGINES**
**75015 Paris (FR)**

(72) Inventeurs:
• **MARDJONO, Jacky**
**77550 Moissy-cramayel Cedex (FR)**
• **CHANEZ, Philippe**
**77550 Moissy-cramayel Cedex (FR)**
• **GONZALEZ, Jérémy**
**77550 Moissy-cramayel Cedex (FR)**
• **KOENIG, Maxime**
**77550 Moissy-cramayel Cedex (FR)**
• **VERSAEVEL, Marc**
**76600 Le Havre (FR)**
• **ZAGANELLI, Franck**
**77300 Fontainebleau (FR)**
• **YESILCIMEN, Henri**
**77550 Moissy-cramayel Cedex (FR)**

(74) Mandataire: **Healy, Erwan et al**
**Cabinet Beau de Loménie**
**158, rue de l'Université**
**75007 Paris (FR)**

(56) Documents cités:
**EP-A2- 2 157 305       FR-A1- 3 009 027**
**JP-A- 2011 099 420      US-A1- 2003 182 925**

## Description

Arrière-plan de l'invention

La présente invention se rapporte au domaine général de la réduction du bruit de jet d'une turbomachine munie d'une tuyère de type à flux séparés.

La pollution sonore est devenue aujourd'hui l'un des sujets de préoccupation pour les motoristes qui sont de plus en plus confrontés à la nuisance acoustique de leurs turbomachines. Les sources de bruit d'une turbomachine sont nombreuses mais il a été constaté que le bruit de jet en sortie de la tuyère de la turbomachine est le bruit prédominant lors des phases de décollage d'un avion. Les autorités de certification étant de plus en plus exigeantes face aux émissions acoustiques des turbomachines, des efforts ont été demandés aux motoristes pour réduire le bruit de leurs turbomachines, et notamment le bruit de jet.

Typiquement, une turbomachine munie d'une tuyère à flux séparés comprend un corps central centré sur l'axe longitudinal de la turbomachine, un capot interne disposé autour du corps central en lui étant coaxial pour délimiter avec celui-ci un canal (ou veine) annulaire d'écoulement d'un flux primaire (ou flux chaud) issu de la turbomachine, et un capot externe disposé autour du capot interne en lui étant coaxial pour délimiter avec celui-ci un canal annulaire d'écoulement d'un flux secondaire (ou flux froid) issu de la turbomachine.

Dans une telle turbomachine, le bruit de jet provient notamment du mélange entre le flux secondaire et le flux d'air extérieur à la turbomachine s'écoulant le long de la paroi extérieure du capot externe. Ce bruit est un bruit à large bande de fréquence généré par deux types de source acoustique : un bruit à haute fréquence provenant de petites structures turbulentes du mélange entre les flux et perçu essentiellement près de l'éjection, et un bruit à basse fréquence provenant des grosses structures tourbillonnaires apparaissant loin du jet.

Pour réduire le bruit de jet, l'un des moyens utilisés consiste à augmenter efficacement le mélange entre les flux gazeux. A cet effet, il est connu de prélever de l'air s'écoulant dans le canal d'écoulement de flux secondaire pour l'éjecter plus en aval au niveau du bord de fuite du capot externe de sorte à agir sur les couches de cisaillement se formant au niveau de la zone de mélange entre le flux secondaire et le flux d'air extérieur à la turbomachine. On pourra par exemple se référer au document WO 2006/013243 qui décrit une mise en oeuvre de ce principe dans laquelle les jets d'air prélevés par des conduits d'alimentation et éjectés au niveau du bord de fuite du capot externe convergent deux à deux pour former des triangles d'interaction.

Pour alimenter les jets d'air formant des perturbations dans le prolongement du bord de fuite du capot externe, cette solution nécessite de prélever de l'air s'écoulant dans le canal d'écoulement de flux secondaire, ce qui présente l'avantage d'éviter de recourir à un système additionnel d'apport d'air. Cependant, un tel prélèvement d'air dans le flux secondaire entraîne nécessairement des impacts sur les performances du moteur qui peuvent s'avérer critiques s'ils ne sont pas suffisamment optimisés.

Les solutions proposées dans l'art antérieur ne permettent donc pas toujours d'obtenir une réduction significative du bruit de jet. En effet, la présence des conduits d'alimentation avec leurs entrées et sorties engendre des impacts sur les performances du moteur qui peuvent s'avérer critiques s'ils ne sont pas suffisamment optimisés. De même, ces conduits entraînent des pénalités importantes de bruit dans les moyennes et hautes fréquence, notamment à cause du bruit aérodynamique causé par l'écoulement du flux au niveau du bord de fuite du capot externe. Le document JP20110099420 divulgue une turbomachine avec un système de jets pour réduire le bruit selon l'art antérieur.

Objet et résumé de l'invention

La présente invention a donc pour but principal de pallier de tels inconvénients en proposant de réduire le bruit de jet d'une turbomachine munie d'une tuyère à flux séparés, notamment en améliorant les performances acoustiques en moyennes et hautes fréquences sans pénaliser trop fortement les performances du moteur.

Ce but est atteint grâce à un dispositif pour la réduction du bruit de jet d'une turbomachine, comprenant un capot externe muni à l'intérieur d'une paroi formant une paroi extérieure d'une veine annulaire d'écoulement d'un flux secondaire issu de la turbomachine, et dans lequel, conformément à l'invention, ladite paroi du capot externe, c'est-à-dire la paroi externe de la veine annulaire, comprend une pluralité de circuits de microjets comprenant chacun des moyens de prélèvement de flux gazeux dans la veine d'écoulement du flux secondaire qui s'ouvrent dans un unique conduit d'alimentation, ledit conduit d'alimentation débouchant au niveau d'un bord de fuite du capot externe par l'intermédiaire d'au moins une grille d'éjection apte à diviser le flux gazeux prélevé en une pluralité de flux gazeux ayant des sections droites de dimensions inférieures à une section droite du conduit d'alimentation.

Chaque circuit de microjets du dispositif selon l'invention a pour fonction de prélever de l'air dans le canal d'écoulement du flux externe pour l'injecter au niveau du bord de fuite du capot externe afin d'agir sur les couches de cisaillement entre le flux secondaire et l'air extérieur à la turbomachine s'écoulant le long du capot externe, et ainsi favoriser le mélange entre ces flux d'air. Le dispositif selon l'invention est remarquable notamment en ce qu'il propose d'utiliser une grille d'éjection destinée à diviser le flux gazeux prélevé en une pluralité de flux gazeux de faibles dimensions. La présence d'une telle grille d'éjection permet ainsi de maintenir la performance aérodynamique du capot externe tout en aboutissant à des performances acoustiques accrues dans les moyennes et hautes fréquences notamment. En effet, la présence de la grille d'éjection permet de ne pas générer de bruit parasite car la pluralité de flux gazeux de faibles dimensions présentent des formes peu intrusives dans le mélange de flux. De plus, cette grille d'éjection permet de réaliser une injection dans le flux secondaire avec un angle de pénétration et/ou un angle de dérapage qui favorisent la réduction du bruit de jet. Enfin, la grille d'éjection a un bruit propre qui est réduit (par rapport à un tube unique débouchant), ce qui améliore les performances acoustiques dans les moyennes et hautes fréquences.

De préférence, la grille d'éjection de chaque circuit de microjets comprend une plaque munie d'une pluralité de perçages ayant chacune une section droite de dimension inférieure à la section droite du conduit d'alimentation.

Dans ce cas, au moins certains des perçages de la plaque de chaque grille d'éjection présentent avantageusement, dans un plan longitudinal par rapport à un axe d'écoulement du flux secondaire, un angle de pénétration par rapport à un axe radial du capot externe compris entre 10° et 60° et/ou, dans un plan transversal par rapport à l'axe d'écoulement du flux secondaire, un angle de dérapage par rapport audit axe radial compris entre 25° et 90°. Les inventeurs ont en effet constaté que des angles de pénétration et de dérapage choisis dans ces plages de valeurs permettent d'obtenir d'importants gains en termes de réduction du bruit de jet.

Les perçages de la plaque de chaque grille d'éjection peuvent présenter une section droite qui est de forme circulaire. Dans ce cas, la section droite des perçages de la plaque de chaque grille d'éjection présente de préférence un diamètre compris entre 0,5 mm et 2,5 mm.

Alternativement, les perçages de la plaque de chaque grille d'éjection peuvent présenter une section droite qui est de forme rectangulaire ou elliptique.

De préférence également, la grille d'éjection de chaque circuit de microjets est alignée axialement avec les moyens de prélèvement de flux gazeux. Cette caractéristique permet de minimiser les pertes de charges.

De préférence encore, une surface d'éjection de la grille d'éjection est comprise entre 0,5% et 2,5% d'une surface d'éjection de la veine d'écoulement du flux secondaire.

Les moyens de prélèvement de flux gazeux de chaque circuit de microjets peuvent comprendre une ou deux écopes de prélèvement débouchant dans la veine d'écoulement du flux secondaire et s'ouvrant dans le conduit d'alimentation.

Avantageusement, le dispositif peut comprendre en outre des aubes fixes directrices de sortie s'étendant radialement depuis la paroi intérieure du capot externe au travers du canal d'écoulement du flux secondaire, chaque circuit de microjets comprenant au moins une écope de prélèvement débouchant dans la veine d'écoulement du flux secondaire en aval des aubes directrices de sortie et s'ouvrant dans le conduit d'alimentation.

Chaque circuit de microjets du dispositif selon l'invention a pour fonction de prélever de l'air dans le canal d'écoulement du flux externe pour l'injecter au niveau du bord de fuite du capot externe afin d'agir sur les couches de cisaillement entre le flux secondaire et l'air extérieur à la turbomachine s'écoulant le long du capot externe, et ainsi favoriser le mélange entre ces flux d'air. Le dispositif selon ce mode de réalisation de l'invention est remarquable notamment en ce qu'il propose, pour alimenter ces circuits de microjets, de positionner les écopes de prélèvement directement en aval des aubes directrices de sortie, c'est-à-dire dans une zone où les conditions d'alimentation en air de ces circuits sont les plus favorables (la pression est plus élevée directement en aval des aubes directrices de sortie). Grâce à un tel positionnement des écopes de prélèvement, il est ainsi possible de minimiser la section d'entrée de ces dernières - et donc les pertes de performances du moteur - sans pour autant affecter l'efficacité du dispositif.

De préférence, ladite au moins une écope de prélèvement de chaque circuit de microjets débouche dans le canal d'écoulement du flux secondaire au niveau d'une zone du capot externe s'étendant axialement d'amont en aval depuis un bord de fuite des aubes directrices de sortie jusqu'à une limite comprise entre 1/3 et 2/3 d'une distance axiale entre le bord de fuite des aubes directrices de sortie et le bord de fuite du capot externe.

Chaque circuit de microjets peut comprendre une unique écope de prélèvement s'ouvrant dans le conduit d'alimentation, l'écope de prélèvement et l'extrémité aval du conduit d'alimentation étant alignés axialement l'un par rapport à l'autre.

Alternativement, chaque circuit de microjets peut comprendre deux écopes de prélèvement s'ouvrant dans le conduit d'alimentation, l'extrémité aval du conduit d'alimentation étant décalée axialement par rapport à chacune des écopes de prélèvement.

Selon une autre alternative, chaque circuit de microjets comprend une unique écope de prélèvement s'ouvrant dans le conduit d'alimentation, ce dernier débouchant au niveau du bord de fuite du capot externe par deux grilles d'éjection qui sont décalées axialement par rapport à l'écope de prélèvement.

Les circuits de microjets sont de préférence régulièrement espacés les uns des autres autour d'un axe longitudinal du capot externe.

De façon avantageuse, le dispositif comprend en outre des moyens pour déployer et escamoter les écopes de prélèvement des circuits de microjets. Ainsi, il est possible d'ouvrir les écopes de prélèvement pendant les phases de décollage pendant lesquelles les microjets doivent être activés pour réduire le bruit de jet, et de fermer ces écopes pendant les autres phases de vol de sorte à s'affranchir des pénalités sur les performances du moteur.

De même, le dispositif peut comprendre en outre des moyens de régulation du débit de flux gazeux s'écoulant dans le conduit d'alimentation des circuits de microjets.

Les évolutions de section entre les sections d'entrée et de sortie de chaque circuit de microjets peuvent avantageusement être progressives pour minimiser les pertes de charges.

La loi d'évolution régissant ladite évolution progressive de section peut par exemple présenter en tout point une dérivée dont la valeur absolue est inférieure à 0,1.

Si on considère pour un exemple de circuit de microjet, une section d'entrée Si d'une valeur de 0,003133 m$^2$, une section de sortie So d'une valeur de 0,002038 m$^2$, et une longueur curviligne de conduit L d'une valeur de 0,3 m, la loi d'évolution progressive régie selon l'équation suivante :

$$\Delta S = So - Si > \frac{\Delta S}{L},$$

pourrait donc s'écrire $\Delta S$ > -0,4%, étant donné que

$$\frac{\Delta S}{L} = -0.365\%.$$

De préférence, le nombre de circuits de microjets du dispositif est supérieur à une valeur correspondant à six fois le diamètre exprimé en mètres de la section circulaire de la tuyère secondaire à l'éjection. Cette valeur est optimisée de sorte à introduire un nombre de microjets suffisant pour avoir un effet sur le bruit de jet et pas trop élevé pour ne pas réaliser trop de prélèvement dans la veine secondaire et donc pour conserver de bonnes performances.

De préférence, le nombre maximal de microjets $N_{max}$ est inférieur à une valeur égale à cinquante fois le diamètre D de la tuyère dans le plan de l'éjection secondaire, soit $N_{max}$ < 50 × $D$.

Il y a un effet notable des microjets sur les composantes de vitesse moyenne de l'écoulement tant que le rapport entre la distance x en aval de la tuyère à partir de l'éjection et le diamètre D de la tuyère dans le plan de l'éjection secondaire est inférieur à quatre, soit x/D<4.

Chaque microjet a une action localisée dont l'étendue est liée à ses caractéristiques géométriques, notamment à l'angle d'injection, et aux conditions thermodynamiques d'injection. Pour agir de manière satisfaisante sur les modes globaux du jet, il est préférable de respecter une distribution minimale de microjets répartis azimutalement au niveau de la tuyère.

En revanche le nombre de microjets ne doit pas être trop important pour éviter que les microjets ne s'entrechoquent directement, ce qui pénaliserait la capacité à contrôler les modes globaux du jet, et pour limiter l'impact sur la performance moteur.

L'invention a également pour objet une turbomachine comprenant un corps central, un capot interne disposé autour du corps central en lui étant coaxial pour délimiter avec celui-ci un canal annulaire d'écoulement d'un flux primaire issu de la turbomachine, et un capot externe disposé autour du capot interne en lui étant coaxial pour délimiter avec celui-ci un canal annulaire d'écoulement d'un flux secondaire issu de la turbomachine, la turbomachine comprenant en outre un dispositif de réduction du bruit de jet tel que défini précédemment, le capot externe de la turbomachine étant avantageusement formé par le capot externe dudit dispositif de réduction du bruit de jet.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 est une vue schématique en coupe longitudinale d'une turbomachine à flux séparés équipée d'un dispositif pour la réduction du bruit de jet selon l'invention ;
- la figure 2 est une vue agrandie et en perspective du dispositif pour la réduction du bruit de jet de la figure 1 ;
- la figure 3 est une vue en coupe longitudinale du dispositif de la figure 2 ;
- la figure 4 est une vue en perspective d'un circuit de microjets du dispositif pour la réduction du bruit de jet de la figure 3 ;
- la figure 5 est une vue d'un circuit de microjets selon une variante de réalisation ;
- la figure 6 est une vue d'un circuit de microjets selon une autre variante de réalisation du dispositif de l'invention ;
- les figures 7A à 7C sont des vues d'une grille d'éjection selon trois plans de coupe différents ;
- la figure 8 est une vue en perspective d'une grille d'éjection selon une variante de réalisation ; et
- la figure 9 est une courbe de gains (en décibels) en fonction des fréquences (en Hz) montrant la réduction de pénalités dans les moyennes et hautes fréquences du dispositif selon l'invention.

Description détaillée de l'invention

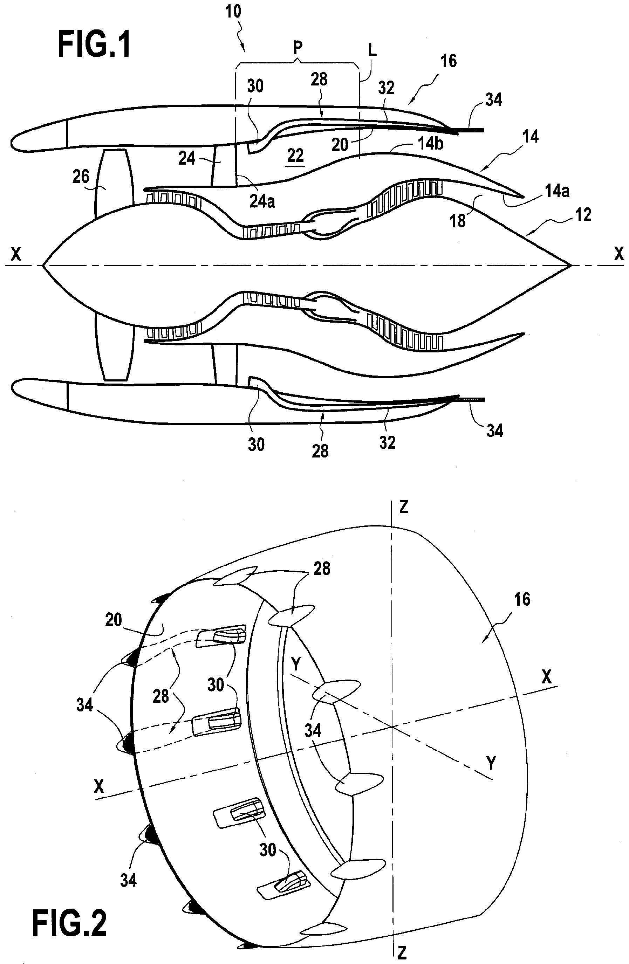

La figure 1 représente, de façon très schématique et en coupe longitudinale, une turbomachine 10 munie d'une tuyère de type à flux séparés.

De façon connue, la turbomachine 10 comprend un corps central 12 centré sur l'axe longitudinal X-X de la turbomachine, un capot interne 14 disposé autour du corps central en lui étant coaxial, et un capot externe 16 disposé autour du capot interne en lui étant coaxial.

Au niveau d'une paroi intérieure 14a, le capot interne 14 délimitent avec le corps central 12 un canal (ou veine) annulaire 18 d'écoulement d'un flux primaire (ou flux chaud) issu de la turbomachine. De même, une paroi extérieure 14b du capot interne 14 et une paroi intérieure 20 du capot externe 16 délimitent entre elles un canal annulaire 22 d'écoulement d'un flux secondaire (ou flux froid).

La turbomachine comprend également une pluralité d'aubes fixes directrices de sortie 24 (appelées OGV pour « Outlet Guide Vane ») qui s'étendent chacune radialement depuis la paroi intérieure 20 du capot externe 16 au travers du canal 22 d'écoulement du flux secondaire jusqu'à la paroi extérieure 14b du capot interne.

Ces aubes directrices de sortie 24 sont positionnées dans le canal 22 d'écoulement du flux secondaire en aval des aubes de soufflante 26 et servent typiquement à redresser le flux secondaire dans l'axe X-X de la turbomachine.

Pour réduire le bruit de jet, en particulier pendant les phases de décollage, l'invention prévoit de prélever de l'air s'écoulant dans le canal 22 d'écoulement du flux secondaire pour l'injecter plus en aval sous forme de microjets au niveau du bord de fuite du capot externe 16 de sorte à agir sur les couches cisaillement entre le flux secondaire et l'air extérieur à la turbomachine s'écoulant le long du capot externe, et ainsi favoriser le mélange entre ces flux d'air.

Plus précisément, pour les conditions d'activation des microjets visées pendant les phases de décollage, les inventeurs ont avantageusement considéré que la vitesse d'éjection de l'air par les microjets devait être d'au moins 200 m/s, le débit d'éjection de l'air par les microjets devait être d'au moins 2,3 kg/s et le rapport entre la surface d'éjection de tous les microjets et la surface d'éjection totale du canal d'écoulement du flux secondaire devait être compris entre 0,5% et 2,5%.

A cet effet, comme représenté plus précisément sur les figures 2 à 4, l'invention prévoit de munir le capot externe 16 de la turbomachine d'une pluralité de circuits de microjets 28, par exemple entre 8 et 16 circuits, qui peuvent être régulièrement espacées les uns des autres autour de l'axe longitudinal X-X.

Chaque circuit de microjets 28 comprend notamment au moins une écope de prélèvement 30 qui débouche dans le canal 22 d'écoulement du flux secondaire en aval des aubes directrices de sortie 24. Les écopes de prélèvement représentées sur les figures sont dites « dynamiques », c'est-à-dire qu'elles font saillies dans le canal d'écoulement du flux secondaire. Alternativement, les écopes de prélèvement pourraient être au même niveau que la paroi intérieure 20 du capot externe.

L'écope de prélèvement 30 de chaque circuit de microjets 28 (ou au moins l'une d'entre elles lorsqu'elles sont plusieurs) est positionnée directement en aval des aubes directrices de sortie 24, et de préférence au niveau d'une zone P du capot externe 16 s'étendant axialement d'amont en aval depuis un bord de fuite 24a des aubes directrices de sortie 24 jusqu'à une limite L comprise entre 1/3 et 2/3 d'une distance axiale entre le bord de fuite des aubes directrices de sortie et le bord de fuite du capot externe.

Chaque circuit de microjets 28 comprend également un unique conduit d'alimentation 32 dans lequel s'ouvre l'écope de prélèvement 30 correspondante et qui débouche par une extrémité aval au niveau d'un bord de fuite du capot externe 16.

Dans le mode de réalisation des figures 1 à 4, le conduit d'alimentation 32 de chaque circuit de microjets est un tube qui est positionné à l'intérieur du capot externe 16 entre sa paroi intérieure 20 et sa paroi extérieure.

Ce conduit d'alimentation 32 est raccordé en amont à la ou les écopes de prélèvement 30 et en aval à au moins une grille d'éjection 34, chaque grille d'éjection étant apte à diviser le flux gazeux prélevé en une pluralité de flux gazeux ayant des sections droites de dimensions inférieures à une section droite du conduit d'alimentation.

De préférence, l'écope de prélèvement 30 et l'extrémité aval du conduit d'alimentation 32 qui est raccordée à la grille d'éjection 34 sont alignés axialement l'un par rapport à l'autre de sorte à minimiser les pertes de charges.

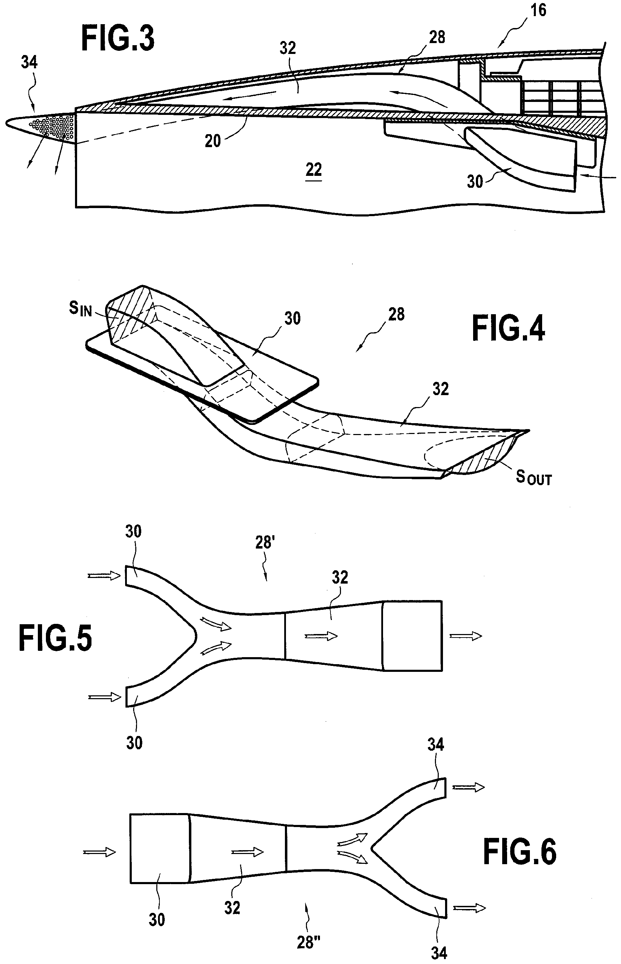

Par ailleurs, on choisira de préférence une écope de prélèvement 30 dont la section d'entrée $S_{IN}$ (figure 4) est comprise entre 0,002 m² à 0,005 m² et un tube d'alimentation 32 dont la section de sortie $S_{OUT}$ est comprise entre 0,001 m² à 0,003 m². Les évolutions de section entre les sections d'entrée $S_{IN}$ et de sortie $S_{OUT}$ sont avantageusement progressives pour minimiser les pertes de charges.

Selon une variante de réalisation représentée sur la figure 5, chaque circuit de microjets 28' comprend deux écopes de prélèvement 30 qui s'ouvrent dans le même et unique conduit d'alimentation 32, l'extrémité aval du conduit d'alimentation étant décalée axialement par rapport à chacune des écopes de prélèvement.

Cette variante de réalisation est particulièrement avantageuse si un débit important est requis pour le circuit de microjets 18'. En effet, avec cette solution à double écope de prélèvement, il est possible d'alimenter le conduit d'alimentation 32 avec des écopes de prélèvement de section d'entrée réduite.

Selon une autre variante de réalisation représentée sur la figure 6, chaque circuit de microjets 28" comprend une unique écope de prélèvement 30 qui s'ouvre dans un unique conduit d'alimentation 32, ce dernier débouchant par deux grilles d'éjection 34 qui sont décalées axialement par rapport à l'écope de prélèvement.

Cette variante de réalisation présente l'avantage de minimiser le nombre total d'écopes de prélèvement, et donc la masse du dispositif selon l'invention.

Selon une disposition avantageuse (non représentée sur les figures) applicable aux trois modes de réalisation décrits ci-dessus, le dispositif pour la réduction du bruit de jet peut comprendre en outre des moyens pour déployer (i.e. ouvrir) et rétracter (i.e. fermer) les écopes de prélèvement des circuits de microjets. Par exemple, ces moyens peuvent être constitués par un dispositif escamotable apte à rétracter l'écope en permettant d'une part de supprimer l'obstacle qu'elle pourrait constituer dans la veine, et d'autre part d'obstruer l'entrée des écopes de prélèvement. Le déplacement en positions d'ouverture et de fermeture d'un tel dispositif escamotable est réalisé par un système d'actionnement tel qu'un vérin.

Avec une telle disposition, il est possible de déployer et d'ouvrir les écopes de prélèvement pendant les phases de décollage pendant lesquelles les microjets doivent être activés pour réduire le bruit de jet, et de rétracter et fermer ces écopes pendant les autres phases de vol de sorte à s'affranchir des pénalités sur les performances du moteur.

Selon une autre disposition avantageuse (non représentée sur les figures) applicable aux trois modes de réalisation décrits ci-dessus, le dispositif pour la réduction du bruit de jet peut comprendre en outre des moyens de régulation du débit de flux gazeux s'écoulant dans le conduit d'alimentation des circuits de microjets. Par exemple, ces moyens peuvent être constitués par une vanne positionnée à l'intérieur du conduit d'alimentation et pilotée par un calculateur électronique de l'avion en fonction des phases de vol.

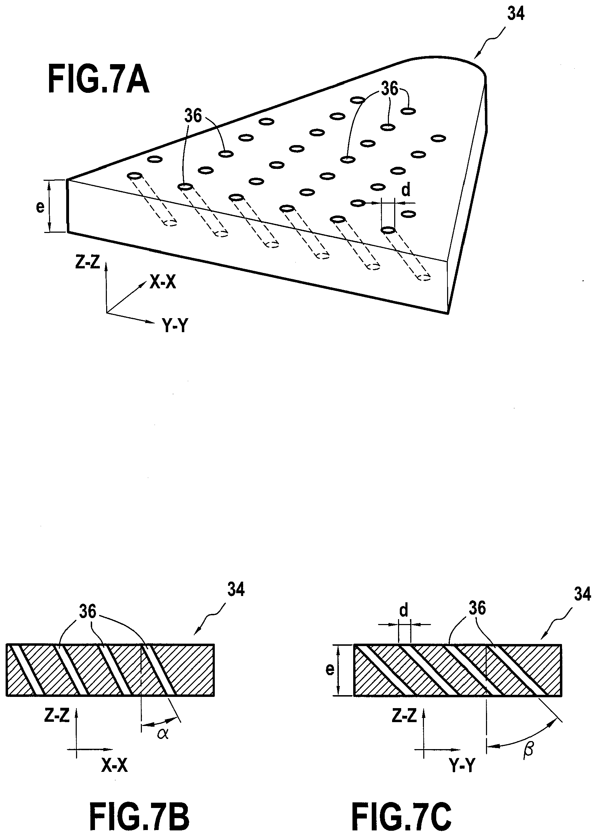

Les figures 7A à 7C représentent plus en détails un exemple de réalisation d'une grille d'éjection 34 équipant chaque circuit de microjets.

La grille d'éjection 34 se présente sous la forme d'une plaque perforée par une pluralité de perçages 36 ayant chacune une section droite de dimension inférieure à la section droite du conduit d'alimentation 32. Plus précisément, ces perçages 36 s'ouvrent en amont dans le conduit d'alimentation 32 du circuit de microjets correspondant et débouchent en aval au niveau du bord de fuite du capot externe 16, dans une zone de confluence entre le flux gazeux issu du canal 22 d'écoulement du flux secondaire et le flux d'air extérieur à la turbomachine s'écoulant autour du capot externe.

Par ailleurs, les perçages 36 débouchent dans cette zone de confluence avec un angle de pénétration $\alpha$ (par rapport à l'axe radial Z-Z du capot externe - figure 4B) et/ou un angle de dérapage $\beta$ (par rapport à l'axe radial Z-Z - figure 4C). L'angle de pénétration $\alpha$ est défini dans un plan longitudinal par rapport à l'axe longitudinal X-X du capot externe (correspondant à l'axe d'écoulement du flux secondaire traversant la turbomachine), c'est-à-dire un plan formé par les axes longitudinal X-X et radial Z-Z du capot externe, tandis que l'angle de dérapage $\beta$ est défini dans un plan transversal par rapport à l'axe longitudinal X-X du capot externe, c'est-à-dire un plan formé par les axes tangentiel Y-Y et radial Z-Z du capot externe.

De préférence, l'angle de pénétration $\alpha$ est compris entre 10° et 60° et l'angle de dérapage $\beta$ est compris entre 25° et 90°. Des angles de pénétration $\alpha$ et de dérapage $\beta$ choisis dans ces plages de valeurs permettent d'obtenir d'importants gains en termes de réduction du bruit de jet.

De plus, comme représenté sur l'exemple de réalisation des figures 7A à 7C, les perçages 36 peuvent présenter une forme cylindrique avec une section droite de forme circulaire.

Dans ce cas, la section droite des perçages 36 présente avantageusement un diamètre d compris entre 0,5 mm et 2,5 mm, à comparer à la section (circulaire ou autre) du conduit d'alimentation 32 qui est comprise entre 0,001 m$^2$ et 0,004 m$^2$.

On notera que la plaque formant la grille d'éjection peut, dans le cas de perçages 36 de forme cylindrique, présenter une épaisseur e qui au moins deux fois supérieure au diamètre d des perçages. Cette épaisseur e pourra bien entendu varier sur toute la longueur de la plaque de sorte à faciliter l'intégration de cette dernière dans la grille d'éjection.

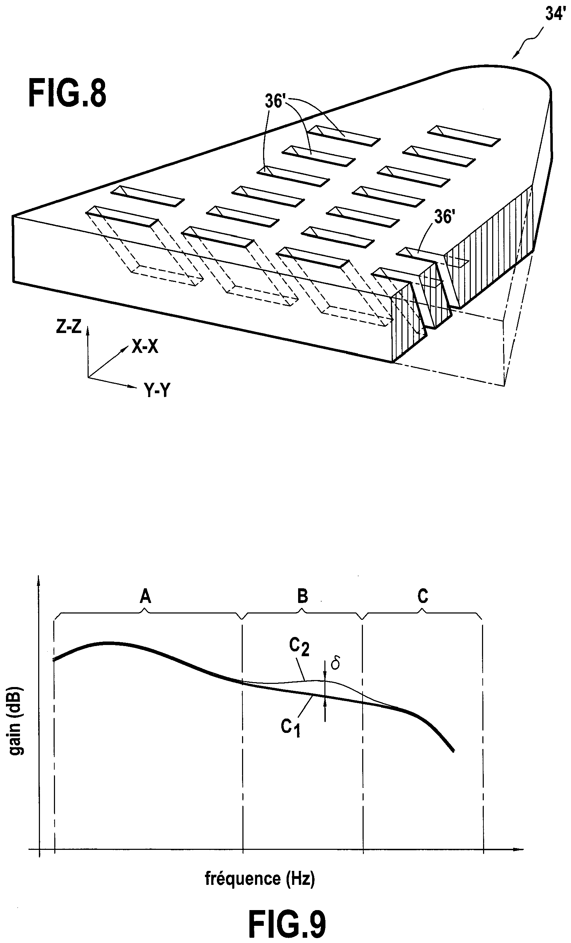

La figure 8 représente une variante de réalisation de la grille d'éjection 34' de chaque circuit de microjets. Dans cette variante, les perçages 36' ont une forme parallélépipédique avec une section droite de forme rectangulaire.

Dans cette variante, la section droite des perçages 36' (c'est à dire leur surface) ont une dimension inférieure à la section droite du conduit d'alimentation et ces perçages présentent avantageusement un angle de pénétration par rapport à l'axe longitudinal du capot externe et/ou un angle de dérapage par rapport à un axe tangentiel au capot externe.

Bien entendu, la forme des perçages pratiqués dans la plaque formant la grille d'éjection pourraient être différente à celles représentées ici. On pourra ainsi choisir des perçages dont la section droite est rectangulaire en inversant longueur et largeur par rapport à la figure 8 ou bien des perçages dont la section droite est de forme elliptique ou autre.

La figure 9 illustre les gains acoustiques (en décibels) en fonction des fréquences (en Hz) obtenus grâce au dispositif pour la réduction du bruit de jet selon l'invention.

La courbe C$_1$ représentée sur cette figure correspond à la courbe des gains acoustiques obtenus grâce à un dispositif de réduction du bruit de jet dépourvu de grilles d'éjection selon l'invention (c'est-à-dire que les conduits d'alimentation débouchent directement au niveau du bord de fuite du capot externe).

La courbe C$_2$ représente les gains acoustiques obtenus grâce à un dispositif pour la réduction du bruit de jet conforme à l'invention (c'est-à-dire avec des grilles d'éjection positionnées au niveau de l'extrémité aval du conduit d'alimentation de chaque circuit de microjets).

Ces courbes montrent un gain acoustique $\delta$ substantiel obtenu par un dispositif selon l'invention (courbe C$_2$) par rapport à un dispositif dépourvu de grilles

d'éjection (courbe C$_1$), notamment dans les moyennes et hautes fréquences (représentées respectivement par les plages de valeurs B et C, la plage A représentant les basses fréquences). Ce gain acoustique est notamment dû à la présence de la grille d'éjection qui a un bruit propre qui est réduit par rapport à un conduit d'alimentation débouchant directement au niveau du bord de fuite du capot externe.

**Revendications**

1. Dispositif pour la réduction du bruit de jet d'une turbomachine (10), le dispositif comprenant un capot externe (16) muni à l'intérieur d'une paroi (20) destinée à former une paroi extérieure d'une veine annulaire (22) d'écoulement d'un flux secondaire issu de la turbomachine (10), où la paroi du capot externe (16) comprend une pluralité de circuits de microjets (28, 28', 28") comprenant chacun des moyens (30) de prélèvement de flux gazeux destinés à prélever un flux gazeux dans la veine (22) d'écoulement du flux secondaire, les moyens (30) de prélèvement de flux gazeux s'ouvrant dans un unique conduit d'alimentation (32), **caractérisé en ce que** ledit conduit d'alimentation (32) débouche au niveau d'un bord de fuite du capot externe (16) par l'intermédiaire d'au moins une grille d'éjection (34 ; 34') apte à diviser le flux gazeux prélevé en une pluralité de flux gazeux ayant des sections droites (d) de dimensions inférieures à une section droite (D) du conduit d'alimentation (32).

2. Dispositif selon la revendication 1, dans lequel la grille d'éjection (34 ; 34') de chaque circuit de microjets (28, 28', 28") comprend une plaque munie d'une pluralité de perçages (36 ; 36') ayant chacune une section droite (d) de dimension inférieure à la section droite (D) du conduit d'alimentation (32).

3. Dispositif selon la revendication 2, dans lequel au moins certains des perçages (36 ; 36') de la plaque de chaque grille d'éjection (34, 34') présentent, dans un plan longitudinal par rapport à un axe (X-X) d'écoulement du flux secondaire, un angle de pénétration ($\alpha$) par rapport à un axe radial (Z-Z) compris entre 10° et 60° et/ou, dans un plan transversal par rapport à l'axe (X-X) d'écoulement du flux secondaire, un angle de dérapage ($\beta$) par rapport audit axe radial (Z-Z) compris entre 25° et 90°.

4. Dispositif selon l'une des revendications 2 et 3, dans lequel les perçages (36) de la plaque de chaque grille d'éjection (34) présentent une section droite qui est de forme circulaire.

5. Dispositif selon la revendication 4, dans lequel la section droite des perçages (36) de la plaque de chaque grille d'éjection (34) présente un diamètre compris entre 0,5 mm et 2,5 mm.

6. Dispositif selon l'une des revendications 2 et 3, dans lequel les perçages (36') de la plaque de chaque grille d'éjection (34') présentent une section droite qui est de forme rectangulaire ou elliptique.

7. Dispositif selon l'une quelconque des revendications 1 à 6, dans lequel la grille d'éjection (34, 34') de chaque circuit de microjets (28, 28', 28") est alignée axialement avec les moyens (30) de prélèvement de flux gazeux.

8. Dispositif selon l'une quelconque des revendications 1 à 7, dans lequel les moyens (30) de prélèvement de flux gazeux de chaque circuit de microjets (28, 28', 28") comprennent une ou deux écopes de prélèvement (30) destinée(s) à déboucher dans la veine (22) d'écoulement du flux secondaire et s'ouvrant dans le conduit d'alimentation (32).

9. Dispositif selon l'un quelconque des revendications 1 à 7, comprenant en outre des aubes fixes directrices de sortie (24) s'étendant radialement depuis la paroi intérieure du capot externe au travers du canal d'écoulement du flux secondaire, chaque circuit de microjets (28, 28', 28") comprenant au moins une écope de prélèvement (30) destinée à déboucher dans la veine (22) d'écoulement du flux secondaire en aval des aubes directrices de sortie et s'ouvrant dans le conduit d'alimentation (32).

10. Dispositif selon la revendication 9, dans lequel ladite au moins une écope de prélèvement (30) de chaque circuit de microjets (28, 28', 28") est destinée à déboucher dans la veine (22) d'écoulement du flux secondaire au niveau d'une zone (P) du capot externe (16) destinée à s'étendre axialement d'amont en aval depuis un bord de fuite (24a) des aubes directrices de sortie (24) jusqu'à une limite (L) comprise entre 1/3 et 2/3 d'une distance axiale entre le bord de fuite des aubes directrices de sortie et le bord de fuite du capot externe.

11. Dispositif selon l'une des revendications 9 ou 10, dans lequel chaque circuit de microjets (28) comprend une unique écope de prélèvement (30) s'ouvrant dans le conduit d'alimentation (32), l'écope de prélèvement (30) et l'extrémité aval du conduit d'alimentation (32) étant alignées axialement l'une par rapport à l'autre.

12. Dispositif selon l'une des revendications 9 ou 10, dans lequel chaque circuit de microjets (28') comprend deux écopes de prélèvement (30) s'ouvrant dans le conduit d'alimentation (32), l'extrémité aval du conduit d'alimentation (32) étant décalée axialement par rapport à chacune des écopes de prélèvement (30).

13. Dispositif selon l'une des revendications 9 ou 10, dans lequel chaque circuit de microjets (28") comprend une unique écope de prélèvement (30) s'ouvrant dans le conduit d'alimentation (32), ce dernier débouchant au niveau du bord de fuite du capot externe (16) par deux grilles d'éjection (34, 34') qui sont décalées axialement par rapport à l'écope de prélèvement (30).

14. Dispositif selon l'une quelconque des revendications 9 à 13, dans lequel les circuits de microjets (28, 28', 28") sont régulièrement espacées les uns des autres autour d'un axe longitudinal du capot externe (16).

15. Dispositif selon l'une quelconque des revendications 9 à 14, comprenant en outre des moyens pour déployer et escamoter les écopes de prélèvement (30) des circuits de microjets (28, 28', 28").

16. Dispositif selon l'une quelconque des revendications 9 à 15, comprenant en outre des moyens de régulation du débit de flux gazeux s'écoulant dans le conduit d'alimentation (32) des circuits de microjets (28, 28', 28").

17. Dispositif selon l'une des revendications 1 à 16, présentant des évolutions de section progressives entre les sections d'entrée ($S_{IN}$) et de sortie ($S_{OUT}$) de chaque circuit de microjets (28, 28', 28") pour minimiser les pertes de charges.

18. Dispositif selon la revendication 17, dans lequel la loi d'évolution régissant ladite évolution progressive de section présente en tout point une dérivée dont la valeur absolue est inférieure à 0,1.

19. Dispositif selon l'une des revendications 1 à 18, dans lequel le nombre de circuits de microjets (28, 28', 28") du dispositif est supérieur à une valeur correspondant à six fois le diamètre exprimé en mètres de la section circulaire de la tuyère secondaire à l'éjection.

20. Turbomachine (10) comprenant un corps central (12), un capot interne (14) disposé autour du corps central en lui étant coaxial pour délimiter avec celui-ci une veine annulaire (18) d'écoulement d'un flux primaire issu de la turbomachine, et un capot externe (16) disposé autour du capot interne en lui étant coaxial pour délimiter avec celui-ci une veine annulaire (22) d'écoulement d'un flux secondaire issu de la turbomachine (10), la turbomachine comprenant en outre un dispositif de réduction du bruit de jet selon l'une quelconque des revendications 1 à 19, le capot externe (16) de la turbomachine (10) étant formé par le capot externe dudit dispositif de réduction du bruit de jet.

21. Turbomachine selon la revendication 20, dans lequel une surface d'éjection de la grille d'éjection (34, 34') du dispositif de réduction du bruit de jet est comprise entre 0,5% et 2,5% d'une surface d'éjection de la veine (22) d'écoulement du flux secondaire.

**Patentansprüche**

1. Vorrichtung zum Reduzieren des Strahlgeräusches einer Turbomaschine (10), wobei die Vorrichtung eine äußere Abdeckung (16) umfasst, die innen mit einer Wand (20) versehen ist, die dazu bestimmt ist, eine Außenwand eines ringförmigen Strömungsgangs (22) eines Sekundärstroms, der von der Turbomaschine (10) ausgegeben wird, zu bilden, wobei die Wand der äußeren Abdeckung (15) eine Vielzahl von Mikrostrahlkreisen (28, 28', 28") umfasst, die jeweils Mittel (30) zur Entnahme von Gasströmen umfassen, die dazu bestimmt sind, einen Gasstrom in dem Strömungsgang (22) des Sekundärstroms zu entnehmen, wobei die Mittel (30) zur Entnahme von Gasströmen sich in eine einzige Versorgungsleitung (32) hinein öffnen, **dadurch gekennzeichnet, dass** die Versorgungsleitung (32) im Bereich einer Hinterkante der äußeren Abdeckung (16) mittels zumindest eines Ausströmgitters (34; 34') mündet, das dazu geeignet ist, den entnommenen Gasstrom in eine Vielzahl von Gasströmen zu teilen, die Profilschnitte ($\underline{D}$) mit Dimensionen aufweisen, die kleiner sind als jene eines Profilschnittes ($\underline{D}$) der Versorgungsleitung (32).

2. Vorrichtung nach Anspruch 1, wobei das Ausströmgitter (34; 34') eines jeden Mikrostrahlkreises (28, 28', 28") eine Platte umfasst, die mit einer Vielzahl von Löchern (36; 36') versehen ist, die jeweils einen Profilschnitt ($\underline{d}$) mit einer kleineren Dimension als der Profilschnitt ($\underline{D}$) der Versorgungsleitung (32) aufweisen.

3. Vorrichtung nach Anspruch 2, wobei zumindest einige der Löcher (36; 36') der Platte eines jeden Ausströmgitters (34, 34') in einer in Bezug auf eine Strömungsachse (X-X) des Sekundärstroms längs verlaufenden Ebene einen Penetrationswinkel ($\alpha$) in Bezug auf eine radiale Achse (Z-Z) zwischen 10° und 60° aufweisen, und/oder in einer in Bezug auf eine Strömungsachse (X-X) des Sekundärstroms quer verlaufenden Ebene einen Schräglaufwinkel ($\beta$) in Bezug auf die radiale Achse (Z-Z) zwischen 25° und 90°.

4. Vorrichtung nach einem der Ansprüche 2 und 3, wobei die Löcher (36) der Platte eines jeden Ausströmgitters (34) einen Profilschnitt aufweisen, der kreisförmig ist.

5. Vorrichtung nach Anspruch 4, wobei der Profilschnitt der Löcher (36) der Platte eines jeden Ausströmgitters (34) einen Durchmesser zwischen 0,5 mm und 2,5 mm aufweist.

6. Vorrichtung nach einem der Ansprüche 2 und 3, wobei die Löcher (36') der Platte eines jeden Ausströmgitters (34') einen Profilschnitt aufweisen, der eine rechteckige oder elliptische Form hat.

7. Vorrichtung nach einem der Ansprüche 1 bis 6, wobei das Ausströmgitter (34, 34') eines jeden Mikrostrahlkreises (28, 28', 28") axial mit den Mitteln (30) zur Entnahme von Gasströmen ausgerichtet ist.

8. Vorrichtung nach einem der Ansprüche 1 bis 7, wobei die Mittel (30) zur Entnahme von Gasströmen eines jeden Mikrostrahlkreises (28, 28', 28") einen oder zwei Entnahmeschächte (30) umfassen, die/der dazu bestimmt ist/sind, in den Strömungsgang (22) des Sekundärstroms zu münden, und sich in die Versorgungsleitung (32) hinein öffnen.

9. Vorrichtung nach einem der Ansprüche 1 bis 7, ferner umfassend feststehende Ausgangs-Leitschaufeln (24), die sich radial von der Innenwand der äußeren Abdeckung quer über den Strömungskanal des Sekundärstroms erstrecken, wobei jeder Mikrostrahlkreis (28, 28', 28") zumindest einen Entnahmeschacht (30) umfasst, der dazu bestimmt ist, stromabwärts der Ausgangs-Leitschaufeln in den Strömungsgang (22) des Sekundärstroms zu münden, und sich in die Versorgungsleitung (32) hinein öffnet.

10. Vorrichtung nach Anspruch 9, wobei der zumindest eine Entnahmeschacht (30) eines jeden Mikrostrahlkreises (28, 28', 28") dazu bestimmt ist, in den Strömungsgang (22) des Sekundärstroms im Bereich einer Zone (P) der äußeren Abdeckung (16) zu münden, die dazu bestimmt ist, sich von einer Hinterkante (24A) der Ausgangs-Leitschaufeln (24) axial von stromaufwärts nach stromabwärts bis zu einer Grenze (L) zu erstrecken, die zwischen 1/3 und 2/3 eines axialen Abstands zwischen der Hinterkante der Ausgangs-Leitschaufeln und der Hinterkante der äußeren Abdeckung beträgt.

11. Vorrichtung nach einem der Ansprüche 9 oder 10, wobei jeder Mikrostrahlkreis (28) einen einzigen Entnahmeschacht (30) umfasst, der sich in die Versorgungsleitung (32) hinein öffnet, wobei der Entnahmeschacht (30) und das stromabwärtige Ende der Versorgungsleitung (32) axial in Bezug aufeinander ausgerichtet sind.

12. Vorrichtung nach einem der Ansprüche 9 oder 10, wobei jeder Mikrostrahlkreis (28') zwei Entnahmeschächte (30) umfasst, die sich in die Versorgungsleitung (32) hinein öffnen, wobei das stromabwärtige Ende der Versorgungsleitung (32) axial in Bezug auf jeden der Entnahmeschächte (30) versetzt ist.

13. Vorrichtung nach einem der Ansprüche 9 oder 10, wobei jeder Mikrostrahlkreis (28") einen einzigen Entnahmeschacht (30) umfasst, der sich in die Versorgungsleitung (32) hinein öffnet, wobei letzterer im Bereich der Hinterkante der äußeren Abdeckung (16) über zwei Ausströmgitter (34, 34'), die axial in Bezug auf den Entnahmeschacht (30) versetzt sind, mündet.

14. Vorrichtung nach einem der Ansprüche 9 bis 13, wobei die Mikrostrahlkreise (28, 28', 28") um eine Längsachse der äußeren Abdeckung (16) herum regelmäßig voneinander beabstandet sind.

15. Vorrichtung nach einem der Ansprüche 9 bis 14, ferner umfassend Mittel zum Ausfahren und Einziehen der Entnahmeschächte (30) der Mikrostrahlkreise (28, 28', 28").

16. Vorrichtung nach einem der Ansprüche 9 bis 15, ferner umfassend Mittel zur Regelung des Durchsatzes des Gasstroms, der in der Versorgungsleitung (32) der Mikrostrahlkreise (28, 28', 28") strömt.

17. Vorrichtung nach einem der Ansprüche 1 bis 16, wobei sie progressive Querschnittsverläufe zwischen dem Eingangs- ($S_{IN}$) und dem Ausgangsquerschnitt ($S_{OUT}$) eines jeden Mikrostrahlkreises (28, 28', 28") aufweist, um Ladedruckverluste zu minimieren.

18. Vorrichtung nach Anspruch 17, wobei das Entwicklungsgesetz, das den progressiven Querschnittsverlauf bestimmt, an jedem Punkt eine Ableitung aufweist, deren absoluter Wert unter 0,1 liegt.

19. Vorrichtung nach einem der Ansprüche 1 bis 18, wobei die Anzahl der Mikrostrahlkreise (28, 28', 28") der Vorrichtung höher ist als ein Wert, der dem sechsfachen Durchmesser des kreisförmigen Querschnitts der sekundären Ausströmdüse, ausgedrückt in Metern, entspricht.

20. Turbomaschine (10), umfassend einen zentralen Körper (12), eine innere Abdeckung (14), die um den zentralen Körper herum angeordnet ist, während sie koaxial mit diesem angeordnet ist, um zusammen mit diesem einen ringförmigen Strömungsgang (18) eines Primärstroms, der von der Turbomaschine ausgegeben wird, zu begrenzen, sowie eine äußere Abdeckung (16), die um die innere Abdeckung herum angeordnet ist, während sie koaxial mit dieser ist, um zusammen mit dieser einen ringförmigen Strömungsgang (22) eines Sekundärstroms, der von der Turbomaschine (10) ausgegeben wird, zu begrenzen, wobei die Turbomaschine ferner eine Vorrichtung zum Reduzieren des Strahlgeräusches nach einem der Ansprüche 1 bis 19 umfasst, wobei die äußere Abdeckung (16) der Turbomaschine (10) durch die äußere Abdeckung der Vorrichtung zum Reduzieren des Strahlgeräusches gebildet wird.

21. Turbomaschine nach Anspruch 20, wobei eine Ausströmfläche des Ausströmgitters (34, 34') der Vorrichtung zum Reduzieren des Strahlgeräusches zwischen 0,5 % und 2,5 % einer Ausströmfläche des Strömungsgangs (22) des Sekundärstroms beträgt.

**Claims**

1. A device for reducing the jet noise from a turbine engine (10), the device comprising an outer cover (16) provided on the inside with a wall (20) configured to form an outer wall of an annular passage (22) for passing a flow of a bypass stream coming from the engine (10), wherein the wall of the outer cover (16) includes a plurality of microjet circuits (28, 28', 28"), each having intake means (30) configured for taking a stream of gas from the bypass stream flow passage (22) and leading to a single feed duct (32), the device being **characterized in that** said feed duct (32) opens out at a trailing edge of the outer cover (16) via at least one ejection grating (34; 34') suitable for splitting the intake gas stream into a plurality of gas streams of right sections (d) that are of dimensions smaller than a right section (D) of the feed duct (32).

2. A device according to claim 1, wherein the ejection grating (34; 34') of each microjet circuit (28, 28', 28") comprises a plate having a plurality of holes (36; 36'), each having a right section (d) of dimension less than the right section (D) of the feed duct (32).

3. A device according to claim 2, wherein at least some of the holes (36; 36') in the plate of each ejection grating (34, 34') present, in a longitudinal plane relative to a flow axis (X-X) of the bypass stream, a penetration angle (α) relative to a radial axis (Z-Z) lying in the range 10° to 60°, and/or, in a transverse plane relative to the flow axis (X-X) of the bypass stream, a sideslip angle (β) relative to said radial axis (Z-Z) lying in the range 25° to 90°.

4. A device according to claim 2 or claim 3, wherein the holes (36) in the plate of each ejection grating (34) present a right section that is circular in shape.

5. A device according to claim 4, wherein the right section of the holes (36) in the plate of each ejection grating (34) presents a diameter lying in the range 0.5 mm to 2.5 mm.

6. A device according to claim 2 or claim 3, wherein the holes (36') in the plate of each ejection grating (34') present a right section that is of rectangular or elliptical shape.

7. A device according to any one of claims 1 to 6, wherein the ejection grating (34, 34') of each microjet circuit (28, 28', 28") is in axial alignment with the gas stream intake means (30).

8. A device according to any one of claims 1 to 7, wherein the gas stream intake means (30) in each microjet circuit (28, 28', 28") comprise one or two intake scoops (30) configured to open out into the bypass stream flow passage (22) and leading to the feed duct (32).

9. A device according to any one of claims 1 to 8, further comprising outlet guide vanes (24) extending radially from the inside wall of the outer cover through the bypass stream flow channel, each microjet circuit (28, 28', 28") having at least one intake scoop (30) configured to open out into the bypass stream flow passage (22) downstream from the outlet guide vanes and leading to the feed duct (32).

10. A device according to claim 9, wherein said at least one intake scoop (30) of each microjet circuit (28, 28', 28") configured to open out into the bypass stream flow passage (22) in a zone (P) of the outer cover (16) configured to extend axially from upstream to downstream from the trailing edges (24a) of the outlet guide vanes (24) to a limit (L) lying in the range 1/3 to 2/3 of the axial distance between the trailing edges of the outlet guide vanes and the trailing edge of the outer cover.

11. A device according to claim 9 or claim 10, wherein each microjet circuit (28) has a single intake scoop (30) leading into the feed duct (32), the intake scoop (30) and the downstream end of the feed duct (32) being axially in alignment with each other.

12. A device according to claim 9 or claim 10, wherein each microjet circuit (28') has two intake scoops (30) leading into the feed duct (32), the downstream end of the feed duct (32) having its axis offset relative to each of the intake scoops (30).

13. A device according to claim 9 or claim 10, wherein each microjet circuit (28") has a single intake scoop (30) leading into the feed duct (32) which opens out at the trailing edge of the outer cover (16) via two ejection gratings (34, 34') having their axes offset relative to the intake scoop (30).

**14.** A device according to any one of claims 9 to 13, wherein the microjet circuits (28, 28', 28") are regularly spaced apart from one another around a longitudinal axis of the outer cover (16).

**15.** A device according to any one of claims 9 to 14, further including means for deploying and retracting the intake scoops (30) of the microjet circuits (28, 28', 28") .

**16.** A device according to any one of claims 9 to 15, further comprising means for regulating the flow rate of the gas stream flowing in the feed ducts (32) of the microjet circuits (28, 28', 28").

**17.** A device according to any one of claims 1 to 16, presenting progressive variations in section between the inlet sections ($S_{IN}$) and the outlet sections ($S_{OUT}$) of each microjet circuit (28, 28', 28") in order to minimize head losses.

**18.** A device according to claim 17, wherein the relationship governing said progressive variation in section presents at all points a derivative of absolute value that is less than 0.1.

**19.** A device according to any one of claims 1 to 18, wherein the number of microjet circuits (28, 28', 28") of the device is greater than a value corresponding to six times the diameter expressed in meters of the circular section of the secondary nozzle at its ejection.

**20.** A turbine engine (10) comprising a central body (12), an inner cover (14) arranged coaxially around the central body in order to co-operate therewith so as to define an annular passage (18) for passing a core stream coming from the engine, and an outer cover (16) arranged coaxially around the inner cover to co-operate therewith to define an annular passage (22) for passing a bypass stream coming from the engine (10), the engine further including a jet noise reduction device according to any one of claims 1 to 19, the outer cover (16) of the engine (10) being formed by the outer cover of said jet noise reduction device.

**21.** A turbine engine according to claim 20, wherein the ejection area of the ejection grating (34, 34') lies in the range 0.5% to 2.5% of the ejection area of the bypass stream flow passage (22).

**FIG.1**

10

P L
30 28 32 16
34
24 20 14b
26 22 14
24a 18 14a 12
X X
30
28 32 34

**FIG.2**

Z
28
20 16
34
30 X
28 Y
34 Y
X
34
30
34

Z

**FIG.3**

34

32

28

16

20

22

30

**FIG.4**

S_IN

30

28

32

S_OUT

30

28'

32

**FIG.5**

30

34

30

32

34

**FIG.6**

28"

**FIG.7A**

34

36

36

d

e

Z-Z

X-X

Y-Y

36

34

α

Z-Z

X-X

**FIG.7B**

d

36

34

e

Z-Z

Y-Y

β

**FIG.7C**

**FIG.8**

34'

36'

36'

Z-Z

X-X

Y-Y

A          B          C

$C_2$

$\delta$

$C_1$

gain (dB)

fréquence (Hz)

**FIG.9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006013243 A
- JP 20110099420 B